# EUROPEAN PATENT SPECIFICATION

(11) **EP 3 717 089 B1**
(45) Date of publication and mention of the grant of the patent: **01.05.2024**
(21) Application number: 18814834.0
(22) Date of filing: 30.11.2018
(51) Int. Cl.: A63H 33/08, B29C 64/00, B33Y 80/00

(54) **AN ADDITIVELY MANUFACTURED TOY BUILDING BRICK**
GENERATIV GEFERTIGTER SPIELZEUGBAUSTEIN
JOUET DU TYPE BRIQUE DE CONSTRUCTION FABRIQUÉE DE MANIÈRE ADDITIVE

(30) Priority: 01.12.2017 DK PA201770902
(43) Date of publication of application: 07.10.2020
(73) Proprietor: LEGO A/S, 7190 Billund (DK)
(72) Inventor: JOHANSEN, Louise Tosti, 7190 Billund (DK); SCHLICHTING, Raphael, 7190 Billund (DK); HADAR, Ronen, 7190 Billund (DK); MIKKELSEN, René, 7190 Billund (DK)
(74) Representative: Guardian IP Consulting I/S
(86) International application number: PCT/EP2018/083095
(87) International publication number: WO 2019/106133

(56) References cited:
- WO-A1-2011/083173
- WO-A1-2017/172740
- US-A1- 2015 190 724
- US-A1- 2015 321 115
- US-A1- 2017 056 782

## Description

### FIELD OF THE INVENTION

The present invention relates to a method for the manufacture of a toy building element made of a polymeric material using an additive manufacturing technique as the manufacturing process. The present invention also relates to a toy building element which is manufactured by said additive manufacturing process.

### BACKGROUND

Additive manufacturing, also known as 3D printing, refers to processes used to build a three-dimensional object, in which the objects are built in a layer-by-layer fashion or by continuously adding material to form the three-dimensional object. The three-dimensional objects can be of a large variety of forms and geometries and are built by use of computer-aided design (CAD) software which control the successively addition of material on top of newly added material.

Toy building elements have been manufactured and marketed for many years. One type of toy building elements can be characterized as the traditional box-shaped building bricks provided with knobs on the upper side and complementary tubes on the lower side. Such box-shaped building bricks were disclosed for the first time in US 3,005,282 and are today manufactured and sold under the trade names LEGO^{®} and LEGO^{®} DUPLO^{®}.

It is known, for example from YouTube, to build toy building elements using an additive manufacturing technique involving the filament extrusion-based additive manufacturing technique. This technique, however, is characterised by its poor dimensional precision and low sensitivity so that three-dimensional objects with complex geometries cannot be produced by the filament extrusion-based additive manufacturing technique. Moreover, objects manufactured by a printer using the filament extrusion-based additive manufacturing technique possess an uneven surface and the separate layers are visible to the naked eye.

Document US2015321115A1 discloses a method for the manufacture of a toy building element comprising all the technical features set out in the preamble of claim 1.

Hence, there is a need for developing and/or modifying additive manufacturing techniques that can build a toy building element with dimensional precision, acceptable surface roughness and acceptable visible appearance.

### SUMMARY OF THE INVENTION

The present invention relates to a novel method for the manufacture of a toy building element using an additive manufacturing technique. The inventors of the present invention have surprisingly found that it is possible to additively manufacture toy building elements with improved dimensional precision, improved surface roughness and improved visible surface appearance so that the separate additions of material are not visible to the naked eye.

The present invention is directed to a method for the manufacture of a toy building element according to claim 1, and an additively manufactured toy building element according to claim 3. Subsidiary aspects of the invention are provided in the dependent claims.

### BRIEF DESCRIPTION OF THE FIGURES

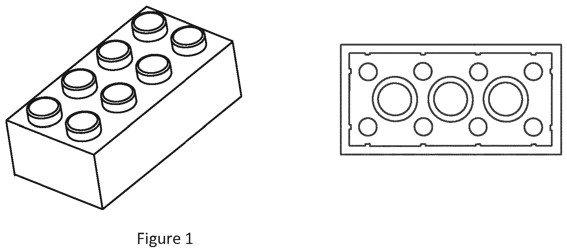

Figure 1 shows a traditional box-shaped LEGO^{®} 2*4 brick.

### DETAILED DESCRIPTION OF THE INVENTION

The present invention relates to a novel method for the manufacture of a toy building element made of polymeric material using an additive manufacturing technique with the proviso that the toy building element is not built using an additive manufacturing process involving filament extrusion-based additive manufacturing technique.

The term "toy building element" as used herein includes the traditional toy building elements in the form of box-shaped building bricks provided with knobs on the upper side and complementary tubes on the lower side. The traditional box-shaped toy building bricks were disclosed for the first time in US 3,005,282 and are widely sold under the tradenames LEGO^{®} and LEGO^{®} DUPLO^{®}. The term also includes other similar box-shaped building bricks which are produced by other companies than The LEGO Group and therefore sold under other trademarks than the trademark LEGO.

The term "toy building element" also includes other kinds of toy building elements that form part of a toy building set which typically comprises a plurality of building elements that are compatible with and hence can be interconnected with each other. Such toy building sets are also sold under the trademark LEGO, such as for example LEGO^{®} bricks, LEGO^{®} Technic and LEGO^{®} DUPLO^{®}. Some of these toy building sets includes toy building figures having complementary tubes on the lower side so that the figure can be connected to other toy building elements in the toy building set. Such toy building figures are also encompassed by the term "toy building element". The term also includes similar toy building elements that are produced by other companies than The LEGO Group and therefore sold under other trademarks than trademark LEGO.

The toy building element is produced by additive manufacturing. By the term "additive manufacturing" or "additively manufactured" as used herein is meant that the brick is built in an additive fashion, i.e. by adding new material on top of either a substrate or on top of newly added material, by repeated solidification of a thin liquid layer or droplet on a substrate or on a previously solidified liquid layer or droplet, or by repeated printing with a thermoplastic polymeric material on a substrate or on a previously printed plastics material, or by repeated soldering in an additive fashion of plastics material e.g. by use of laser.

The additive manufacturing technique is either photopolymerization additive manufacturing or thermoplastic additive manufacturing. Suitable examples of thermoplastic additive manufacturing include liquid-based additive manufacturing, toner-based additive manufacturing, powder-based additive manufacturing and granulate-based additive manufacturing.

Photopolymerization additive manufacturing is a process in which liquid, energy/radiation curable resins and/or photopolymers react to energy. When exposed to energy (light, laser, UV etc.), a chemical process is initiated, and the resin solidifies. This process is then repeated to add material and create a three-dimensional shape. Some additive manufacturing photopolymerization-based technologies are based on a liquid-filled container which is selectively exposed to energy (laser, light, UV etc.) while some technologies are based on the jetting or deposition of resin and a following curing process. Materials used in these processes may also include fillers, fibres, additives etc.

Thermoplastic additive manufacturing is a process in which a polymer becomes pliable or soft when heated or liquefied by chemicals, pressure or any other means so that the material fed to the 3D printer is in the form of a thermoplastic liquid. These technologies could either first melt / semi-melt / liquefy the thermoplastic material and then selectively deposit it or first deposit the material and then selectively melt / semi-melt / sinter it so that the newly deposited material bonds within the layer and between layers. There after the material hardens when cooled or the chemicals diffuse / evaporate out of the polymer or the material is solidified by any other means. The additive manufacturing process is then repeated to add material and create a three-dimensional shape. Materials used in these processes may also include fillers, fibres, additives etc.

By the term "liquid-based additive manufacturing" as used herein is meant that the polymer is in the liquid state before depositing it on a substrate or on a previously deposited liquid layer or droplet. The liquid is obtained without using heat.

By the term "toner-based additive manufacturing" as used herein is meant that the polymer is in a solid powder state before depositing it on a substrate or on previously deposited powder. The powder has the form of very fine particles with a size of up to 30µm. No chemical additives are required to keep the powder in this state.

By the term "powder-based additive manufacturing" as used herein is meant that the polymer is in a solid powder state before depositing it on a substrate or on previously deposited powder. The powder has the form of fine particles with a size larger than 30µm. No chemical additives are required to keep the powder in this state.

By the term "granulate-based additive manufacturing" as used herein is meant that the polymer is in a solid pellet state before it is melted and then deposited on a substrate or on previously deposited granulate. Such solid pellet state is also used in injection moulding. No chemical additives are required to keep the powder in this state.

In the additive manufacturing process the first layer or droplet of material is added on a substrate. In typical embodiments the substrate is a building platform which is separated from the three-dimensional object when the final three-dimensional object has been obtained. In other embodiments the substrate may be a component which forms part of the final three-dimensional object. Suitable examples of such components could be a plate or a tube or a box or an injection moulded toy building element. The component may be made of a polymeric material or the component may be made of a metallic material, wood or a ceramic.

For manufacturing of elements with an overhang or other complex geometry a support structure may be needed. This structure can either be made of the same material as the toy building element or it may be made of a support material. The additive manufacturing process is the same as it is for the building material, as described above. The only difference is that this structure or support material needs to be removed afterwards. The removal process can be either done manually, semi-automatically in a liquid or chamber or even in a fully automated process.

The total additive manufacturing process may be divided into 4 steps:
- a pre-printing step which includes all processes before the actual printing of the toy building element and covers all processes regarding material handling (such as controlling temperature, moisture level and the like), machine preparation (such as cleaning, calibrating, heating and the like) and file preparation (such as slicing and digital positioning in build chamber of the printer),
- a printing step which is the process of actually building the toy building element using any of the mentioned techniques that creates the toy building element,
- optionally, a structure or support material removal step which is the process of removing support material or structure from the toy building element geometry, and
- optionally, a post-treatment step which refers to any process that covers a surface treatment in order to influence and/or improve the surface quality, such as the surface roughness.

In one embodiment the toy building element is build using photopolymerization additive manufacturing. In another embodiment the toy building element is build using thermoplastic additive manufacturing. In yet another embodiment the toy building element is build using liquid-based additive manufacturing. In still another embodiment the toy building element is build using toner-based additive manufacturing. In another embodiment the toy building element is build using powder-based additive manufacturing. In yet another embodiment the toy building element is build using granulate-based additive manufacturing.

The present invention also relates to a toy building element, which is manufactured by the method according to the present invention.

It is an important beneficial feature of the toy building elements according to the present invention that the surface roughness is markedly decreased as compared with prior art toy building elements shown on the YouTube. Hence the toy building elements of the present invention have markedly improved surface appearance in that each separate additions of material is not visible by the naked eye. This improved surface appearance is obtained without subjecting the additively manufactured toy building element to any kind of post-treatment that has an effect of the surface roughness.

The surface roughness of the toy building elements of the present invention is measured using the method described in ISO 4287: 1997. It is important to note that the "surface roughness" refers to the roughness of the surface as determined after the printing step and the optional support removal step but before subjecting the printed element to an optional post-treatment step which may influence or improve the surface roughness.

In some embodiments the surface roughness of the additively manufactured toy building elements is defined by having an arithmetical mean height of the profile (*Ra*) below 100 µm and a root mean square height of the profile (*Rq*) below 100 µm when measured according to ISO 4287:1997. In other embodiments the surface roughness of the toy building element is defined by having an arithmetical mean height of the profile (*Ra*) below 75 µm and a root mean square height of the profile (*Rq*) below 75 µm when measured according to ISO 4287:1997. In other embodiments the surface roughness of the toy building element is defined by having an arithmetical mean height of the profile (*Ra*) below 50 µm and a root mean square height of the profile (*Rq*) below 50 µm when measured according to ISO 4287:1997. In still other embodiments the surface roughness of the toy building element is defined by having an arithmetical mean height of the profile (*Ra*) below 25 µm and a root mean square height of the profile (*Rq*) below 30 µm when measured according to ISO 4287:1997.

The toy building element of the present invention is made of a polymeric material comprising either a photopolymer or a thermoplastic polymer dependent on the additive manufacturing technique by which the element has been built.

In some embodiments the toy building element is made of a polymeric material comprising one photopolymer, where the photopolymer is a bio-based polymer, a hybrid bio-based polymer or a petroleum-based polymer. In other embodiments the toy building element is made of a polymeric material comprising two or more photopolymers, where said photopolymers may be bio-based polymers, hybrid bio-based polymers, petroleum-based polymers or a mixture of bio-based polymers and/or hybrid bio-based polymers and/or petroleum-based polymers.

In some embodiments the toy building element is made of a polymeric material comprising one thermoplastic polymer, where the thermoplastic polymer is a bio-based polymer, a hybrid bio-based polymer or a petroleum-based polymer. In other embodiments the toy building element is made of a polymeric material comprising two or more thermoplastic polymers, where said thermoplastic polymers may be bio-based polymers, hybrid bio-based polymers, petroleum-based polymers or a mixture of bio-based polymers and/or hybrid bio-based polymers and/or petroleum-based polymers.

In some embodiments the mixture of bio-based and petroleum-based polymers comprises at least 25% bio-based polymer and at most 75% petroleum-based polymer, such as at least 50% bio-based polymer and at most 50% petroleum-based polymer, for example at least 60% bio-based polymer and at most 40% petroleum-based polymer. In other embodiments the mixture of bio-based and petroleum-based polymers comprises at least 70% bio-based polymer and at most 30% petroleum-based polymer, such as at least 80% bio-based polymer and at most 20% petroleum-based polymer, for example at least 90% bio-based polymer and at most 10% petroleum-based polymer. In yet other embodiments the mixture of bio-based and petroleum-based polymers comprises at least 95% bio-based polymer and at most 5% petroleum-based polymer, such as at least 97% bio-based polymer and at most 3% petroleum-based polymer, for example at least 99% bio-based polymer and at most 1% petroleum-based polymer.

In some embodiments the mixture of bio-based and hybrid bio-based polymers comprises at least 25% bio-based polymer and at most 75% hybrid bio-based polymer, such as at least 50% bio-based polymer and at most 50% hybrid bio-based polymer, for example at least 60% bio-based polymer and at most 40% hybrid bio-based polymer. In other embodiments the mixture of bio-based and hybrid bio-based polymers comprises at least 70% bio-based polymer and at most 30% hybrid bio-based polymer, such as at least 80% bio-based polymer and at most 20% hybrid bio-based polymer, for example at least 90% bio-based polymer and at most 10% hybrid bio-based polymer. In yet other embodiments the mixture of bio-based and hybrid bio-based polymers comprises at least 95% bio-based polymer and at most 5% hybrid bio-based polymer, such as at least 97% bio-based polymer and at most 3% hybrid bio-based polymer, for example at least 99% bio-based polymer and at most 1% hybrid bio-based polymer.

In some embodiments the mixture of hybrid bio-based and petroleum-based polymers comprises at least 25% hybrid bio-based polymer and at most 75% petroleum-based polymer, such as at least 50% hybrid bio-based polymer and at most 50% petroleum-based polymer, for example at least 60% hybrid bio-based polymer and at most 40% petroleum-based polymer. In other embodiments the mixture of hybrid bio-based and petroleum-based polymers comprises at least 70% hybrid bio-based polymer and at most 30% petroleum-based polymer, such as at least 80% hybrid bio-based polymer and at most 20% petroleum-based polymer, for example at least 90% hybrid bio-based polymer and at most 10% petroleum-based polymer. In yet other embodiments the mixture of hybrid bio-based and petroleum-based polymers comprises at least 95% hybrid bio-based polymer and at most 5% petroleum-based polymer, such as at least 97% hybrid bio-based polymer and at most 3% petroleum-based polymer, for example at least 99% hybrid bio-based polymer and at most 1% petroleum-based polymer.

By the term "bio-based polymer" as used herein is meant a polymer which is produced by chemical or biochemical polymerization of monomers derived from biomass. Bio-based polymers include polymers produced by polymerization of one type of monomer derived from biomass as well as polymers produced by polymerization of at least two different monomers derived from biomass.

In a preferred embodiment the bio-based polymer is produced by chemical or biochemical polymerization of monomers which are all derived from biomass.

Bio-based polymers can be divided into three groups:
1. Polymers produced by biochemical polymerization, i.e. for example by use of microorganisms. The monomers are produced using biomass as substrate. Examples of such polymers include polyhydroxyalkanoates, such as polyhydroxyvalerate and poly(hydroxybutyrate-hydroxyvalerate).
2. Polymers produced by chemical polymerization, i.e. by chemical synthesis. The monomers are produced using biomass as substrate. Examples of such polymers include polylactic acid.
3. Polymers derived from plants. The polymers are produced by biochemical processes inside of the plant typically during growth. The polymers are isolated and optionally subsequently modified. Examples of such polymers include modified cellulose such as for example cellulose acetate.

In some embodiments, the bio-based polymer is produced by biochemical polymerization. In other embodiments the bio-based polymer is produced by chemical polymerization. In yet other embodiments the bio-based polymer is produced by biochemical or chemical polymerization. In still other embodiments the bio-based polymer is derived from plants.

Bio-based polymers also include polymers having the same molecular structure as petroleum-based polymers, but which have been produced by chemical or biochemical polymerization of monomers derived from biomass.

By the term "petroleum-based polymers" as used herein is meant a polymer produced by chemical polymerization of monomers derived from petroleum, petroleum by-products or petroleum-derived feedstocks. Examples include polyethylene, polyethylene terephthalate and polymethylmethacrylate.

By the term "hybrid bio-based polymer" as used herein is meant a polymer which is produced by polymerization of at least two different monomers, where at least one monomer is derived from biomass and at least one monomer is derived from petroleum, petroleum by-products or petroleum-derived feedstocks. The polymerization process is typically a chemical polymerization process.

The terms "bio-based polymers", "hybrid bio-based polymers" and "petroleum-based polymers" also include recycled polymers. By the term "recycled polymers" as used herein is meant polymers which have been obtained by recovering scrap or waste plastic and reprocessing it into a useful polymeric material.

The hybrid bio-based polymers may also be characterized by their content of bio-based carbon per total carbon content. In some embodiments the content of bio-based carbon in the hybrid bio-based polymer is at least 25% based on the total carbon content, such as at least 30% or at least 40%. In other embodiments the content of bio-based carbon in the hybrid bio-based polymer is at least 50% based on the total carbon content, such as at least 60% for example at least 70%, such as at least 80%.

The term "bio-based carbon" as used herein refers to the carbon atoms that originate from the biomass that is used as substrate in the production of monomers which form part of the bio-based polymers and/or the hybrid bio-based polymers. The content of bio-based carbon in the hybrid bio-based polymer may for example be determined by Carbon-14 isotope content as specified in ASTM D6866 or CEN/TS 16137 or an equivalent protocol.

Also the resin comprising a bio-based polymer and/or a hybrid bio-based polymer and/or a petroleum-based polymer may be characterized by its content of bio-based carbon per total carbon content. In some embodiments the content of bio-based carbon in the resin is at least 25% based on the total carbon content in the resin, such as for example at least 30% or at least 40%. In other embodiments the content of bio-based carbon in the resin is at least 50% based on the total carbon content in the resin, such as at least 60%, for example at least 70%, such as at least 80%, preferably at least 90% or at least 95%.

In some embodiments the toy building element is made of a polymeric material comprising at least one bio-based polymer and one or more fillers. In other embodiments the toy building element is made of a polymeric material comprising at least one hybrid bio-based polymer and one or more fillers. In yet other embodiments the toy building element is made of a polymeric material comprising at least one petroleum-based polymer and one or more fillers. Suitable examples of fillers include natural fillers, mineral fillers and metallic fillers.

In some embodiments the toy building element is built using the photopolymerization additive manufacturing technique. In such embodiments the toy building element is made of a photopolymeric material comprising a photopolymer selected from the group consisting of epoxy-based photopolymers and acrylate-based photopolymers and mixtures thereof. Optionally, the photopolymeric material may also comprise fillers and/or fibres. Suitable examples of fillers include natural fillers, mineral fillers and metal fillers.

In some embodiments the toy building element is built using the thermoplastic additive manufacturing technique. In such embodiments the toy building element is made of a thermoplastic material comprising a thermoplastic polymer selected from the group consisting of polyamide (PA), acrylonitrile butadiene styrene (ABS), polylactic acid (PLA), polyethylene (PE), polypropylene (PP), polyethylene furanoate (PEF), polybutylene furanoate (PBF), polytrimethylene furandicarboxylate (PTF), polyethylene terephthalate (PET), polybutylene terephthalate (PBT), polytrimethylene terephthalate (PTT), polyethylene terephthalate glycol-modified (PETG), polyethylene terephthalate - isophthalic acid copolymer (PET-IPA), polyethylene terephthalate naphthalene (PETN), polybutyrate adipate terephthalate (PBAT), thermoplastic elastomer (TPE), thermoplastic polyurethane (TPU or TPE-U), polyamide-polyether elastomer (TPA), thermoplastic Styrene Elastomer (TPE-S or TPS), thermoplastic Polyester Elastomer (TPE, TPE-O or TPO), polyolefin plastomers (POP), polyolefin elastomers (POE), olefin Block Copolymers (OBCs), ethylene Propylene Diene Monomer (EPDM), propylene-ethylene copolymers, modified Thermoplastic olefin (mTPO), styrene-ethylene-butylene-ethylene (SEBS), styrene butylene styrene (SBS), 5-hydroxyisophthalic acid (HIPA), polycarbonate (PC), polyoxymethylene (POM), polyketone (PK) and cellulose acetate (CA) and mixtures thereof. Optionally, the thermoplastic material may also comprise fillers and/or fibres. Suitable examples of fillers include natural fillers, mineral fillers and metal fillers.

### EXAMPLES

In the examples below it is described how a toy building brick is manufactured by additive manufacturing. The manufactured bricks were subsequently analysed by a "Surface roughness test" and by a "Brick assembly test" in order to determine the characteristics of the surface of the manufactured bricks.

### Surface roughness test

The measurements were performed using a stylus profilometer Taylor Hobson FormTalysurf 50.

The measurements were performed in the lateral surface. The stylus was measuring a profile with a length of 5 mm.

### Analysis:

The measurements analysis has been carried out using the software SPIP version 6.7.2

### Profile correction:

The profile correction was made through a line form removal.

### Filters:

No filters (λs and λc - from *ISO 13565-1:1996 Geometrical Product Specifications (GPS)* -- *Surface texture: Profile method; Surfaces having stratified functional properties* -- *Part 1: Filtering and general measurement conditions*) have been applied.

### Brick assembly test

Purpose: Evaluate and score the physical the effort it requires to assemble and subsequently disassemble traditional LEGO^{®} 2*4 bricks (test specimen) produced in a certain material.

Test person: The test person is an average adult.

Test conditions: The test should be performed indoor with a temperature of 20-25 degrees C and 20-65% relative humidity.

Test specimen: The test is conducted on two similar coloured LEGO^{®} 2*4 bricks which have been produced in a relevant material. Following production, the test specimens should be stored in indoor conditions at 20-25 degrees C and 20-65% relative humidity.

Test: The test is carried out within 2-10 days after production. Two test specimens will be used in the test and the upper-side of one brick will be aligned with the lower-side of the other brick and then they will be assembled and disassembled using all knobs on the upper-side and all tubes on the lower-side. The test person will assemble and immediately disassemble the test bricks without twisting by hand for a total of 10 cycles in a row. For each cycle, the test person will note a test score as specified below.

Scoring: The scorings of the first two assembly/disassembly cycles are disregarded. The final test score is reported as the average score obtained for cycles 3-10.

| Test score | Description |
|---|---|
| 1 | Little effort is required to assemble the bricks and the bricks feel very loosely connected. It requires little to no effort to disassemble the bricks. |
| 5 | Low to medium effort is required to assemble the bricks and the bricks feel well connected. It requires low to medium effort to disassemble the bricks. |
| 10 | Medium to high effort is required to assemble the bricks and once fully assembled the bricks feel very tightly connected. It requires maximum effort for the test person to disassemble the bricks. |

If it is not possible to disassemble a set of assembled bricks by hand, then the test specimen receives a score of ND in the test.

An acceptable material for use in the manufacturing of toy building elements will receive an average test score in the range of 3 to 7.

A commercial available LEGO^{®} 2*4 brick produced in ABS receives per definition a score of 5.

### General description. Manufacture of an additively manufactured toy building brick

In general the toy building elements can be built using the following description:
The digital CAD file needs to be saved in a file format as STL, 3MF or similar, that can be read by a 3D printer/Additive Manufacturing (AM) machine. This file needs to be imported into the slicing software of the relevant printer. The file will be virtually cut into small horizontal layers. The thickness of these layers/slices is dependent on the printer's resolution. Additional toolpaths within a layer are dependent on the chosen AM technology. For droplet based AM technologies the toolpath is rather a deposition pattern or matrix of droplets. The traditional LEGO^{®} 2*4 bricks will then be produced layer by layer in the respective AM technology.

For manufacturing of elements with an overhang or other complex geometry a support structure may be needed. This structure can either be made of the same material or out of a support material. The manufacturing/deposition process is the same as it is for the building material, as described above. The only difference is that this support structure needs to be removed afterwards. The removal process can be either done manually, semi-automatically in a liquid or chamber or even in a fully automated process.

### Example 1. Manufacture of a toy building brick using a granulate additive manufacturing technique.

In order to print a LEGO^{®} 2*4 toy building brick in PLA (3100HP, purchased from Natureworks) on the ARBURG Freeformer, two types of parameter-sets need to be adjusted. On the machine side, the parameter-set for a spherical evenly extruded droplet shape is needed. Even though the Freeformer is a semi-self-regulating system in terms of material pressure and movement of the screw, some parameters need to be set manually. On the software side, the toy building element needs to be sliced with the right parameter-set, in order to define the toolpath where the nozzle deposits droplets.

### Machine parameter-set:

T_{chamber} = 60 degrees C
T_{nozzle} = 200 degrees C
T_{zone2} = 180 degrees C
T_{zone1} = 155 degrees C
Discharge measure = 74%

### Slicing parameter-set:

Feed rate continuous extrusion = 40
Feed rate discrete extrusion = 40
Drop aspect ratio = 1.04
Number of border contours = 1
Inner compensation factor = 0.2
Sorting = Inside out
Area filling overlap with border contour= 50%
Start angle = 45 degrees
Increment angle = 90 degrees
Filling degree = 95%

### Surface roughness:

The additively manufactured brick was subjected to the Surface roughness test and the following results were obtained.

Following ISO 4287:1997 (*Geometrical Product Specifications (GPS)* -- *Surface texture: Profile method* -- *Terms, definitions and surface texture parameters*), the arithmetical mean height of the profile (*Ra*) and the root mean square height of the profile (*Rq*) were calculated.

The values of *Ra* were below 25 µm and the values of *Rq* were below 30 µm.

The result shows that the brick has acceptable surface roughness.

### Brick assembly test:

The manufactured 2*4 building bricks were tested by 5 people according to the procedure described in the Brick assembly test. The average test score was 2.

The score of the brick assembly test shows that the bricks can be assembled and disassembled, but the bricks are loosely connected and it requires little to no effort to disassemble the bricks.

The score of the brick assembly test shows that the surface friction of the manufactured toy building brick is low and therefore further modification of the tested PLA is required in order to manufacture toy building elements having acceptable surface friction so that the bricks are less loosely connected.

### Example 2. Manufacture of a toy building brick using powder-based additive manufacturing technique

LEGO^{®} 2*4 toy building brick is printed on EOS Formiga printer in PA12 (PA2200 from EOS) using the standard EOS slicing settings, with a layer thickness of 0.1 mm and standard hatch spacing of 0.25mm. The number of contours is two. The exposure type is "EOS". The chamber temperature is 169°C. The knobs of the brick are facing upwards, while the tube-side is facing downwards. The placement of the bottom surface of the element is aligned to the slicing layers, so it starts exactly with a layer and not in the middle.

The brick is unpacked and depowdered, no additional post processing is used.

### Surface roughness:

The additively manufactured brick was subjected to the Surface roughness test and the following results were obtained:
Following ISO 4287:1997 (*Geometrical Product Specifications (GPS)* -- *Surface texture: Profile method* -- *Terms, definitions and surface texture parameters*), the arithmetical mean height of the profile (*Ra*) and the root mean square height of the profile (*Rq*) were calculated.

The values of *Ra* were below 25 µm and the values of *Rq* were below 30 µm.

The result shows that the brick has acceptable surface roughness.

### Brick assembly test:

The manufactured 2*4 building bricks were tested by 5 people according to the procedure described in the Brick assembly test. The average test score was 1.

The score of the brick assembly test shows that the bricks can be assembled and disassembled, but the bricks are very loosely connected, and it requires little to no effort to disassemble the bricks.

The score of the brick assembly test shows that the surface friction of the manufactured toy building brick is low and therefore further modification of the tested PA12 is required in order to manufacture toy building elements having acceptable surface friction so that the bricks are less loosely connected.

### Example 3. Manufacture of a toy building brick using photopolymerization additive manufacturing technique

LEGO^{®} 2*4 toy building brick is printed on the Stratasys Objet 350 Connex 2 printer in an acrylic compound ("vero blue" from Stratasys) using the High Quality (HQ) settings with a layer thickness of 16 µm. The knobs of the brick are facing downwards, while the tube-side is facing upwards.

The support material is removed by washing, no additional post processing is used.

### Surface roughness:

The additively manufactured brick was subjected to the Surface roughness test and the following results were obtained:
Following ISO 4287:1997 (*Geometrical Product Specifications (GPS)* -- *Surface texture: Profile method* -- *Terms, definitions and surface texture parameters*), the arithmetical mean height of the profile (*Ra*) and the root mean square height of the profile (*Rq*) were calculated.

The values of *Ra* were below 25 µm and the values of *Rq* were below 30 µm.

The result shows that the brick has acceptable surface roughness.

### Brick assembly test:

The manufactured 2*4 building bricks were tested by 5 people according to the procedure described in the Brick assembly test. The average test score was 8.

The score of the brick assembly test shows that the bricks can be assembled and disassembled, but the bricks are tightly connected, and it requires high effort to disassemble the bricks.

The score of the brick assembly test shows that the surface friction of the manufactured toy building brick is high and therefore further modification of the tested acrylic compound is required in order to manufacture toy building elements having acceptable surface friction so that the bricks are less tightly connected.

### Conclusion

In Examples 1-3 it has been shown that toy building elements can be produced in 3 different materials using 3 different additive manufacturing methods. The results show that it is possible to produce additively manufactured toy building elements with satisfactory surface roughness. The results also show that further modification of the tested materials are required in order to obtain building elements with acceptable surface friction which can satisfy the Brick assembly test.

## Claims

1. A method for the manufacture of a toy building element made of a polymeric material using an additive manufacturing technique in which the element is built in an additive fashion, **characterized in that** the additive manufacturing technique by which the element is built is either photopolymerization additive manufacturing or thermoplastic additive manufacturing, selected from powder-based additive manufacturing or granulate-based additive manufacturing, with the proviso that the toy building element is not built using an additive manufacturing technique involving filament extrusion-based additive manufacturing, and
wherein the polymeric material is selected from acrylate-based photopolymers when photopolymerization additive manufacturing is used and the polymeric material is selected from polyamide when powder-based additive manufacturing is used, and the polymeric material is selected from polylactic acid when granulate-based additive manufacturing is used.

2. The method according to claim 1, wherein the additively manufactured toy building element has a surface roughness defined by having an arithmetical mean height of the profile (*Ra*) below 100 µm and a root mean square height of the profile (*Rq*) below 100 µm when measured according to ISO 4287:1997.

3. An additively manufactured toy building element manufactured by the method according to any one of claims 1 or 2.

4. The toy building element according to claim 3, wherein the element is made of a polymeric material comprising a photopolymer or a thermoplastic polymer.

5. The toy building element according to claim 4, wherein the photopolymer or the thermoplastic polymer is a bio-based polymer, a hybrid bio-based polymer, a petroleum-based polymer or a mixture of bio-based polymers and/or hybrid bio-based polymers and/or petroleum-based polymers.

6. The toy building element according to any one of claims 4 or 5, wherein the photopolymer is acrylate-based photopolymers.

7. The toy building element according to any one of claims 4 or 5, wherein the thermoplastic polymer is selected from the group consisting of polyamide (PA), and polylactic acid (PLA).

8. The toy building element according to any one of claims 3 to 7, wherein the element is made of a polymeric material that further comprises fillers and/or fibres.

## Patentansprüche

1. Verfahren zur Fertigung einem Spielzeugbaustein aus einem Polymermaterial unter Verwendung einer additiven Fertigungstechnik, bei der das Element auf additive Weise hergestellt wird, **dadurch gekennzeichnet, dass** die additive Fertigungstechnik, mit der das Element hergestellt wird, entweder additive Fertigung durch Photopolymerisation oder thermoplastische additive Fertigung ist, ausgewählt aus pulverbasierter additiver Fertigung oder granulatbasierter additiver Fertigung, mit der Maßgabe, dass der Spielzeugbaustein nicht unter Verwendung einer additiven Fertigungstechnik hergestellt wird, die eine auf Filamentextrusion basierende additive Fertigung beinhaltet, und wobei das Polymermaterial aus Photopolymeren auf Acrylatbasis ausgewählt ist, wenn additive Fertigung mittels Photopolymerisation verwendet wird, und das Polymermaterial aus Polyamid ausgewählt ist, wenn pulverbasierte additive Fertigung verwendet wird, und das Polymermaterial aus Polymilchsäure ausgewählt ist, wenn granulatbasierte additive Fertigung verwendet wird.

2. Verfahren nach Anspruch 1, wobei der additiv gefertigte Spielzeugbaustein eine Oberflächenrauheit aufweist, die dadurch definiert ist, dass sie bei Messung nach ISO 4287:1997 eine arithmetische mittlere Höhe des Profils (*Ra*) unter 100 µm und eine quadratische mittlere Höhe des Profils (*Rq*) unter 100 µm aufweist.

3. Additiv gefertigter Spielzeugbaustein, gefertigt nach dem Verfahren nach einem der Ansprüche 1 oder 2.

4. Spielzeugbaustein nach Anspruch 3, wobei das Element aus einem Polymermaterial besteht, das ein Photopolymer oder ein thermoplastisches Polymer umfasst.

5. Spielzeugbaustein nach Anspruch 4, wobei das Photopolymer oder das thermoplastische Polymer ein biobasiertes Polymer, ein hybrides biobasiertes Polymer, ein erdölbasiertes Polymer oder eine Mischung aus biobasierten Polymeren und/oder hybriden biobasierten Polymeren und/oder Polymeren auf Erdölbasis ist.

6. Spielzeugbaustein nach einem der Ansprüche 4 oder 5, wobei es sich bei dem Photopolymer um Photopolymere auf Acrylatbasis handelt.

7. Spielzeugbaustein nach einem der Ansprüche 4 oder 5, wobei das thermoplastische Polymer ausgewählt ist aus der Gruppe bestehend aus Polyamid (PA) und Polymilchsäure (PLA).

8. Spielzeugbaustein nach einem der Ansprüche 3 bis 7, wobei das Element aus einem Polymermaterial gefertigt ist, das weiter Füllstoffe und/oder Fasern umfasst.

## Revendications

1. Procédé de fabrication d'un élément de construction de jouet constitué d'un matériau polymère à l'aide d'une technique de fabrication additive dans laquelle l'élément est construit de manière additive, **caractérisé en ce que** la technique de fabrication additive au moyen de laquelle l'élément est construit, est soit une fabrication additive par photopolymérisation, soit une fabrication additive thermoplastique, choisie parmi une fabrication additive à base de poudre ou une fabrication additive à base de granulés, à condition que l'élément de construction de jouet ne soit pas construit à l'aide d'une technique de fabrication additive impliquant une fabrication additive à base d'extrusion de filaments, et dans lequel le matériau polymère est choisi parmi des photopolymères à base d'acrylate lorsqu'une fabrication additive par photopolymérisation est utilisée, et le matériau polymère est choisi parmi un polyamide lorsqu'une fabrication additive à base de poudre est utilisée, et le matériau polymère est choisi parmi l'acide polylactique lorsqu'une fabrication additive à base de granulés est utilisée.

2. Procédé selon la revendication 1, dans lequel l'élément de construction de jouet fabriqué de manière additive présente une rugosité de surface définie en ce qu'elle présente une hauteur moyenne arithmétique du profil (*Ra*) inférieure à 100 µm et une hauteur quadratique moyenne du profil (*Rq*) inférieure à 100 µm lorsqu'elle est mesurée selon la norme ISO 4287:1997.

3. Élément de construction de jouet fabriqué de manière additive, fabriqué par le procédé selon l'une quelconque des revendications 1 ou 2.

4. Élément de construction de jouet selon la revendication 3, dans lequel l'élément est composé d'un matériau polymère comprenant un photopolymère ou un polymère thermoplastique.

5. Élément de construction de jouet selon la revendication 4, dans lequel le photopolymère ou le polymère thermoplastique est un polymère biosourcé, un polymère biosourcé hybride, un polymère à base de pétrole ou un mélange de polymères biosourcés et/ou de polymères biosourcés hybrides et/ou de polymères à base de pétrole.

6. Élément de construction de jouet selon l'une quelconque des revendications 4 ou 5, dans lequel le photopolymère est un photopolymère à base d'acrylate.

7. Élément de construction de jouet selon l'une quelconque des revendications 4 ou 5, dans lequel le polymère thermoplastique est choisi dans le groupe constitué par le polyamide (PA) et l'acide polylactique (PLA).

8. Élément de construction de jouet selon l'une quelconque des revendications 3 à 7, dans lequel l'élément est composé d'un matériau polymère qui comprend en outre des charges et/ou des fibres.
